# EUROPEAN PATENT SPECIFICATION

(11) **EP 2 813 106 B1**
(45) Date of publication and mention of the grant of the patent: **10.10.2018**
(21) Application number: 13705669.3
(22) Date of filing: 06.02.2013
(51) Int. Cl.: H04W 48/08, G06F 17/22, H04W 84/12

(54) **SYSTEMS AND METHODS FOR ENABLING STATIONS TO CONNECT TO WIRELESS HOTSPOTS USING NON-UNICODE SERVICE SET IDENTIFICATION INFORMATION**
SYSTEME UND VERFAHREN ZUR AKTIVIERUNG VON STATIONEN ZUR VERBINDUNG DRAHTLOSER HOTSPOTS MITHILFE VON NICHT-UNICODE-SERVICESATZ-IDENTIFIKATIONSINFORMATIONEN
SYSTÈMES ET PROCÉDÉS POUR PERMETTRE À DES STATIONS DE SE CONNECTER À DES POINTS D'ACCÈS SANS FIL AU MOYEN DE DONNÉES D'IDENTIFICATION D'UN ENSEMBLE DE SERVICES À UN FORMAT NON UNICODE

(30) Priority: 06.02.2012 US 201261595291 P; 25.01.2013 US 201313750915
(43) Date of publication of application: 17.12.2014
(73) Proprietor: Qualcomm Incorporated, San Diego, CA 92121-1714 (US)
(72) Inventor: RAHUL, Jammula, San Diego, California 92121-1714 (US); KUMAR, Deepak Jindal, San Diego, California 92121-1714 (US)
(74) Representative: Wegner, Hans
(86) International application number: PCT/US2013/024833
(87) International publication number: WO 2013/119599

(56) References cited:
- US-A1- 2003 215 074
- RESEARCH IN MOTION: "Clarifying the requirements for the CJKV language ambiguity with the NITZ feature", 3GPP DRAFT; C1-102429, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Dublin; 20100702, 5 July 2010 (2010-07-05), XP050443156, [retrieved on 2010-07-05]
- "chromium - Issue 190935 - non-ASCII Wifi SSID is not displayed correctly", , 2 November 2010 (2010-11-02), XP055063103, Retrieved from the Internet: URL:http://code.google.com/p/chromium/issu es/detail?id=190935&can=1&q=unicode%20SSID &colspec=ID%20Pri%20M%20Iteration%20Releas eBlock%20Cr%20Status%20Owner%20Summary%20O S%20Modified [retrieved on 2013-05-15]
- "android - Issue 8035 - WiFi association fails for SSIDs with spaces in them", , 29 April 2010 (2010-04-29), XP055063104, Retrieved from the Internet: URL:http://code.google.com/p/android/issue s/detail?id=8035&can=1&q=ssid%20utf&colspe c=ID%20Type%20Status%20Owner%20Summary%20S tars [retrieved on 2013-05-15]

## Description

### Field

The present teachings relate to systems and methods for enabling stations to connect to wireless hotspots using non-Unicode service set identification information. The present teachings more particularly relate to platforms and techniques for enabling the specification of a character set which a wireless router or other WiFi™ access point is using to broadcast available service sets to wireless devices in range of that access point

### Background.

It has been observed that there are common potential problems in smart phones based on the Android™ operating system or others, in terms of connectivity to wireless WiFi™ routers, hot spots, or other access points (APs) broadcasting in certain languages. One problem is that Android™-based phones or other devices are unable to show the exact service set identification (SSID) name of the wireless router in the phone's scan window for WiFi™ routers or other access points which are configured with SSID data in languages other than English. This problem has also been encountered in other fields in which names are encoded in other languages than English, see for example US 2003/0215074 A1. Those alternative languages can be or include languages such as Chinese, Indian, Spanish, etc. This, by itself, means that if there are two co-located AP's which are each configured with a unique Chinese SSID, for instance, and the user of the smart phone or other device wants to connect to one of the two, then the user has no basis upon which to choose one to connect to, just by viewing the scan window of the smart phone graphical user interface (GUI).

The reason for this difficulty is that existing smart phones or other devices will display unintelligible or junk characters in place of the intended Chinese characters indicating SSID information in that language. To make matters worse, even if the user guesses and selects one of the access points to connect to, the smart phone is typically not able to establish a connection with the selected router or hot spot. Some smart phones are not even capable or recognizing or scanning an access point when the SSID is configured in Chinese, Indian, Spanish, etc. This is a significant limitation of smart phones from the perspective of many users, because a smart phone which is expected to connect with any WiFi™ hot spot in the world can actually paralyze the complete WLAN feature of the smart phone when the phone's user tries to connect to those hot spots which are configured with non-English SSID's, as mentioned above.

In terms of smart phones based on the Android™ operating system, the reason that Android™ phones display "junk" characters for Chinese or other languages is not because the Android™ graphical user interface (GUI), which is powered or supported by the Java™ framework, does not support Chinese characters. Instead, a significant part of the difficulty lies in the way processing of SSID information is handled in the existing Android™ operating system and related logic. More particularly, the Android™ framework, including the supplicant module used to establish connections to hotspots, is completely unaware of the encoding format in which the SSID name is encoded in beacon frames broadcast by the access point. Instead, smart phones based on the existing Android™ operating system merely and always assume that SSID information passed to them is in Unicode (UTF-8 code) format. This default processing of character sets results in anomalous behavior if the SSID is encoded in a coding format other than Unicode. As noted, wireless routers or other access point devices may be encoded in non-Unicode formats in many regions of the world, including as noted China, as well as other locations.

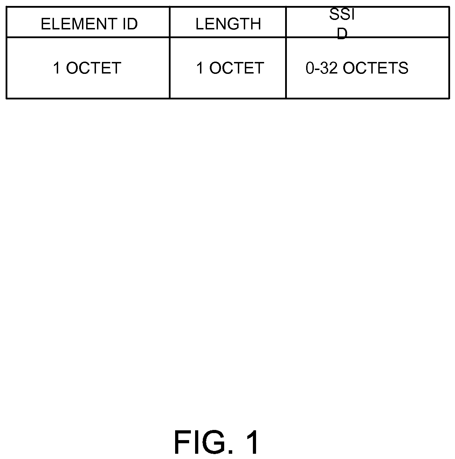

To consider the existing SSID format used by smart phones connecting to WiFi™ access points, the SSID information is presented in an SSID Information Element identified by Element Id: 0, in a structure which is illustrated in FIG. 1. The SSID IE shown is mandated by industry standards published by the Institute of Electrical and Electronics Engineers, or "IEEE.". As per this SSID IE which is defined by the IEEE standards, the only significant information conveyed is the SSID name and the length of the SSID. There is no additional information that is available to assist in identifying the character set, associated language, or other extended characteristics of a WiFi™ access point.

A scenario can likewise be considered in which there are two access points transmitting and announcing their SSID's, which might be in English and Chinese, respectively, within a local broadcast range. As expected the SSID IE's broadcast the SSID's, but the English SSID is encoded according to ASCII code set, whereas the Chinese SSID might be encoded according to the official Guo Biou (GB) code set promulgated for Chinese character processing.

The smart phone supplicant module, which interfaces between the Java™ framework and the underlying WLAN driver and other transceiver logic, receives these two SSID IE's from the WLAN interface. The supplicant module passes both of them on to the Android™ graphical user interface (GUI) framework. That GUI framework handles the responsibility of appropriately decoding the SSID name and displaying it in the smart phone's WiFi™ scan window or other display. But the Chinese SSID which is encoded in the separate GB code is assumed to be represented UTF-8 compatible code, causing it to be decoded incorrectly by the Android™ Java™ framework, since that framework attempts to decode the GB code assuming the character set information is available in UTF-8 format.

This incompatibility leads to unintelligible or "junk" characters being displayed in the device's scan window. In contrast, since the UTF-8 values for ASCII-based characters are identical, the scan window shows the English SSID correctly on the smart phone.

If an attempt were made to manage the issue for Chinese or other non-English SSIDs outside conventional ASCII set, that approach would cause the supplicant module and Java™ framework module installed on the smart phone to require very complex and possibly unreliable decoding logic to identify whether the SSID name is encoded in ASCII, GB code, or any other encoding scheme that the access point might use. It may be remembered that there is no guideline mandated by the IEEE for access point manufacturers to encode the SSID in any particular coding format. That lack of standardization makes the possible decoding of the access point character set by the smart phone itself that much more difficult at the supplicant/framework level.

It may be desirable to provide systems and methods for enabling stations to connect to wireless hotspots using non-Unicode service set identification information, in which the access point can systematically share which coding scheme is used for the character set used for the SSID broadcast by that device. This information can be passed to the Android™ operating system, Java™ framework, and/or other logic which can then accurately and reliably parse the SSID based on a variety of different character coding schemes, providing visibility into WiFi™ networks by users of a variety of languages.

### SUMMARY

The invention relates to a method operated in an access point according to claim 1, to an access point according to claim 3, to a method operated in an wireless station according to claim 4, to a wireless station according to claim 6 and to a computer-program according to claim 7. Further embodiments are defined in the dependent claims.

The invention is set out in the appended set of claims. The embodiments and/or examples of the following description which are not covered by the appended claims are considered as not being part of the present invention .

### DESCRIPTION OF DRAWINGS

The accompanying drawings, which are incorporated in and constitute a part of this specification, illustrate embodiments of the present teachings and together with the description, serve to explain the principles of the present teachings. In the figures:
FIG. 1 illustrates a service set information element as used in known WiFi™ systems;
FIG. 2 illustrates an overall wireless WiFi™ network in which systems and methods for enabling stations to connect to wireless hotspots using non-Unicode service set identification information can operate, according to various embodiments;
FIG. 3 illustrates features of an individual smart phone or other WiFi™ station, according to various embodiments;
FIGS. 4A-4C illustrate various character set encoding schemes that can be used in stations to connect to wireless hotspots using non-Unicode service set identification information, in which an SSID IE structure is extended according to the present teachings, according to various embodiments;
FIGS. 5A and 5B illustrate possible formats that can be adopted for allowing stations to connect to wireless hotspots using non-Unicode service set identification information, in which a vendor-specific IE is added to the beacon frame that can carry the character set encoding information, according to various embodiments;
FIG. 6 illustrates overall character set encoding operations that can be used in configuring stations to connect to wireless hotspots using non-Unicode service set identification information, according to various embodiments; and
FIG. 7 illustrates exemplary hardware, software, and other resources that can be used in enabling stations to connect to wireless hotspots using non-Unicode service set identification information, according to various embodiments.

### DESCRIPTION

Embodiments of the present teachings relate to systems and methods for enabling stations to connect to wireless hotspots using non-Unicode service set identification information. More particularly, embodiments relate to platforms and techniques for generating and embedding native character set information into the beacon information broadcast by wireless routers and/or other access points in a WiFi™ and/or other wireless networks. According to aspects, an identification of the character set, and/or associated language, used by an access point can be inserted into SSID information elements and/or otherwise built into extended encoding schemes transmitted by the access point broadcasting to one or more smart phones and/or other stations within operating range of that wireless device. Each receiving smart phone or other station can be configured to locate and decode the embedded character set information in the beacon, to allow a user to view and select access points in their intended operating language. That can be accomplished whether that character set and/or language is encoded in the Unicode format, or other formats. Enhanced portability, reliability, and usability of WiFi™ routers and operations can thereby be achieved.

Reference will now be made in detail to exemplary embodiments of the present teachings, which are illustrated in the accompanying drawings. Where possible the same reference numbers will be used throughout the drawings to refer to the same or like parts.

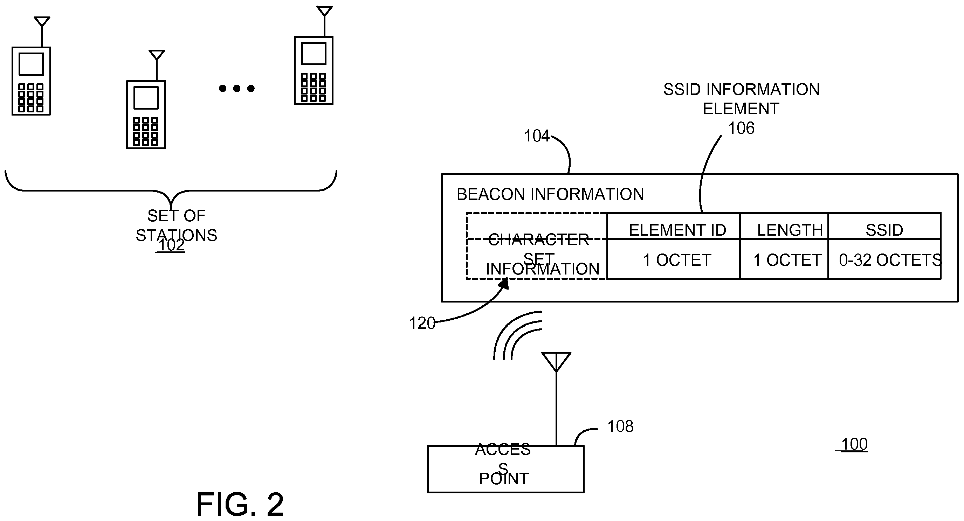

FIG. 2 illustrates an overall network environment 100 in which systems and methods for enabling stations to connect to wireless hotspots using non-Unicode service set identification information can operate, according to aspects. In aspects as shown, an access point 108 can broadcast a wireless network signal to a set of stations 102 within range. In aspects, the access point 108 can be or include a wireless router, hub, extender, and/or other network access point, and can in embodiments be configured to operate using the WiFi™ wireless standard, specified by IEEE specification 802.11b, 802.11g, 802.11n, and/or other existing or future standards. In aspects, when operating as a WiFi™ access point, the access point 108 can for instance operate in the 2.4 GHz frequency band. It will be appreciated however that in implementations, other wireless access standards, channels, protocols, and/or frequencies can be used.

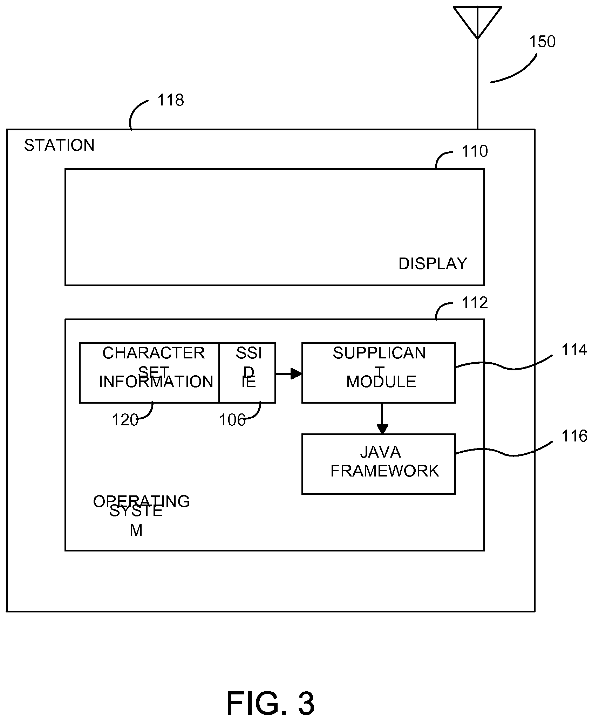

In aspects, each device or station in the set of stations 102 can be or include any wireless-network enabled device, such as a WiFi™-equipped smart phone, touch pad device, media player device, GPS (global positioning system) device, and/or other device or network-enabled platform. In aspects, and as shown in FIG. 3, each individual station 118 in the set of stations 102 can be configured with one or more hardware, software, service, and/or other resources. In aspects as shown, a station 118 can comprise various hardware, software, and other resources, including an operating system 112, a display 110 which can for instance be or include a graphical user interface (GUI) of the operating system 112, and a radio frequency antenna 150 (or multiple antennas). In aspects, the operating system 112 can comprise a mobile device operating system such as the Android™ operating system available from Google Inc., Mountain View, California, U.S. or others. In aspects, the operating system 112 as noted can comprise a graphical user interface (GUI), as well as file management, power management, communications, security, and/or other logic, services, and/or resources to operate each station 118. According to aspects, each individual station 118 can likewise host applications, services, logic, and/or modules including a supplicant module 114 used to establish connections to access points and/or other channels. Each individual station 118 can likewise incorporate a Java™ framework 116, used to support the execution of Java™-based services and applications on the station 118.

In aspects, any one or more of the set of stations 102 can in general be connected, or available to be connected, to the access point 108 at one time. In general, and as likewise shown in FIG. 2, the access point 108 can broadcast beacon information 104 to the set of stations 102. The beacon information 104 can in general include a service set identification (SSID) information element (IE) 106 indicating the name, connection type, occupied and/or available channels, and other network information and services provided by the access point 108 to any station within its wireless connection range. According to aspects, in general, the beacon information 104 broadcast by the access point 108 configured according to the teachings herein can comprise not just the standard SSID IE 106, but also character set information 120 indicating or encoding the type of character set formatting or encoding used to broadcast the SSID IE 106, and/or other information. By incorporating native character set information 120 into the beacon information 104 itself, each smart phone or other station 118 in the set of stations 102 can receive, decode, and display that information about the access point 108, regardless of whether the SSID IE 106 is stored or encoded in the Unicode format, and/or other proprietary or distinct character set encoding schemes.

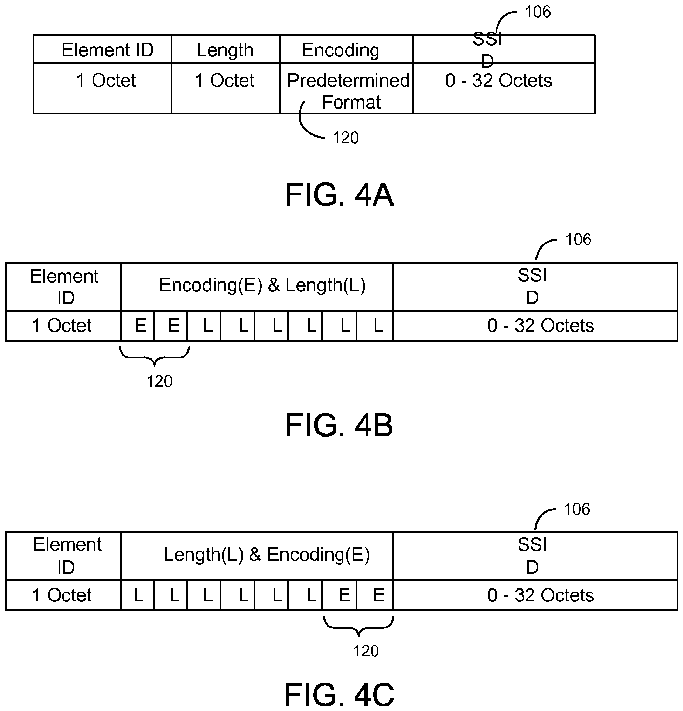

According to aspects, the character set information 120 which identifies the character set encoding scheme can be embedded in the beacon information 104 in various ways, according to various embodiments. However, it will be appreciated that all implementations permit the use of non-Unicode or propriety character sets by the access point 108, and the recognition of those character sets by the set of stations 102. More specifically and as for instance illustrated in FIGS. 4A-4C, the character set information 120 can be encoded within the standard SSID IE 106 format by either adding additional fields, or "borrowing" or "stealing" selected bits from the existing fields, of that information element.

More particularly, as for example shown in FIG. 4A, the character set information 120 and/or portions thereof can be encoded in an additional field labeled "Encoding" added to the SSID IE 106. The Encoding field can be stored in a variety of formats and/or lengths, such as a one-byte or two-byte value indicating the character set to be used, for instance, via a look-up table and/or other reference. According to aspects, and as for example further shown in FIG. 4B, the character set information 120 and/or portions thereof can instead be encoded in selected bits of the existing Length (L) field (this legacy 1 byte Length (L) field may also be referred to herein as an encoding (E) and length (L) field, since it carries both encoding and length information) of the standard SSID IE 106. In aspects as shown in FIG. 4B, the fist two bits of the encoding (E) and length (L) field can be re-assigned or re-interpreted as the specification of the character set used by the access point 108, thereby allowing four independent character sets to be specified and used.

In additional implementations, and as shown in FIG. 4C, the character set information 120 and/or portions thereof can alternatively be encoded in last two bits of the encoding (E) and length (L) field. According to aspects, the use of encoding schemes or types as illustrated in FIGS. 4B and 4C result in particularly compact encoding formats, since the overall length of the SSID IE 106 is not enlarged to accommodate the character set information 120. It will be appreciated, however, that other bit combinations and/or positions can be used to encode the character set information 120, as desired.

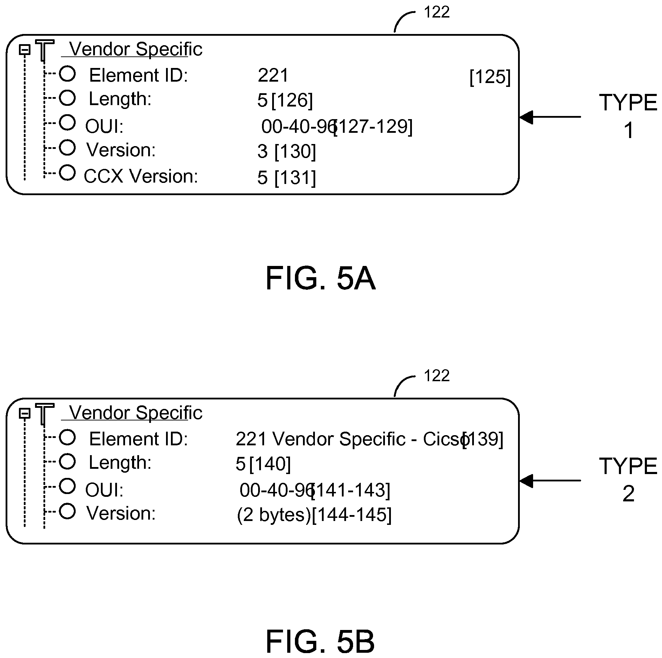

According to implementations in further regards, the character set information 120 can also be encoded or embedded in other positions in the SSID IE 106 or related information, such as a vendor-specific information element (IE) 122 which is added to or specified in the beacon information 104, but which is not incorporated in the base SSID IE 106. In aspects, and as for example shown in FIG. 5A, the vendor-specific information element (IE) 122 can be configured as a Cisco-compatible extension (CCX), illustratively labeled "Type 1," having an illustrative format as shown in that figure, including an Element ID field, a length field, an organizationally unique identifier (OUI) field, a version field, and a separate CCX version field. In aspects, and as for example shown in FIG. 5B, the vendor-specific information element (IE) 122 can be configured in a non-CCX based format, labeled as "Type 2," including an Element ID field, a length field, an organizationally unique identifier (OUI) field, and a data field (illustratively two bytes). Any one or more of the foregoing fields or combinations of fields, and/or other fields or combinations can be used consistent with implementations shown in FIGS. 5A and 5B to encode or specify the character set used by the access point 108 and/or SSID IE 106 being broadcast by that access point, which can again be identified or determined via a look-up table and/or other reference.

It may be noted that, according to aspects, implementations as shown in FIGS. 5A and 5B may hold advantages in terms of backward compatibility with existing WiFi™ access point and station hardware. This can be the case because devices configured according to the existing industry standards can continue to operate in the usual or expected manner, even when those devices operate in the presence of platforms equipped with encoding schemes according to the present teachings. More particularly, implementations using a vendor-specific information element (IE) 122 enjoy an advantage compared to other solutions involving the extension of the SSID IE 106, since backward compatibility is ensured. In implementations using a vendor-specific information element (IE) 122, various scenarios can be compatibly or transparently handed, from the perspective of a user of a station 108 or other device. Particularly, a station 118 which is not adapted or upgraded according to the present teachings and/or cannot parse or understand the vendor-specific information element (IE) 122 which has encoding information may be referred to as an "old station." In contrast, a station which is adapted or upgraded to use features of the present teachings and can parse or understand the vendor-specific information element (IE) 122 which has character set encoding information may be referred to as a "new station." Similarly for access points, an access point which is not adapted or upgraded to support features of sending a vendor-specific information element (IE) 122 with encoded character set information may be referred to as an "old access point," while an access point which is adapted or upgraded to support features of sending a vendor-specific information element (IE) 122 with encoded character set information can be referred to as a "new access point." Using those terms or references, according to embodiments illustrated in FIGS. 5A and 5B, if there is any old station 118 that receives beacon information 104 from a new access point 108, then the old station 118 can safely ignore the additional IE since it does not understand that construction.

Conversely, if there is any new station 118 that receives beacon information from a new access point 108, then the new station 118 can parse the encoding information located in the vendor-specific information element (IE) 122, as described herein. On the other hand, if there is a new station 118 which receives beacon information 104 from an old access point 108, then the new station 118 will still be able to ensure that the current behavior (i.e., the way in which an existing or old station 118 behaves with an existing or old access point 108) remains intact or unaltered.

In terms of overall operation, according to any of the various implementations described herein, the access point 108 therefore transmits the beacon information 104 incorporating character set information 120 including encoding information which serves to identify the encoding logic, character set, language, and/or other formatting or logic used by the access point 108 to pack the SSID IE 106 in the beacon information 104. The supplicant module 114 of any individual receiving station 118 can then parse the correct data field from the appropriate information element and/or field of the beacon information 104 (e.g., extended or altered fields of the standard SSID IE 106 and/or vendor-specific information element (IE) 122) which gives the encoding value.

The supplicant module 114 can then pass this encoding value to the Java™ framework 116, along with the SSID data, including the constituent fields and/or IEs that it communicates to the Java™ framework 116 in current implementations not employing platforms and techniques described herein. The Java™ framework 116 can then decode the raw SSID data based on the specified encoding information. According to aspects, once a character set is identified, the Java™ framework 116 can for instance look up and/or otherwise retrieve that character set, for instance, from local memory or storage, and/or from remote sources. The Java™ framework 116 can accordingly display the SSID and/or other information to the user via display 110 of the station 118 in a properly decoded character set and/or language. According to aspects, the Java™ framework 116 may only understand Unicode (UTF-8 or other) encoding, so that any ultimately identified character set encoding has to be eventually decoded and/or translated to equivalent UTF-8 code set. The Java™ framework 116 of the station 118 can then display the appropriate fonts in the display 110 via a graphical user interface (GUI) screen and/or other interface, assuming support for necessary fonts is in place.

According to aspects, when user tries to connect to a particular access point 108, then the Java™ framework 116 can exchange the necessary information with the supplicant module 114 via a "SET_NETWORK" or other command. Based on the information passed to the supplicant module 114, the supplicant module 114 will be able to choose the correct access point 108 from the list of scanned access points available to the station 118 which the supplicant module 114 is aware of. The supplicant module 114 can then for instance transmit an authorization frame, the first frame that gets exchanged between a station and access point when a new connection is initiated according to WiFi™ standards, essentially ensuring the connection of the station 118 to the access point 108. According to aspects, the user of station 118 is thereby enabled to not only see the access point 108 in the scan window in the correct language, but is also ensured to be able to successfully connect to the access point 108, as well. Those abilities represent a significant improvement over the non-standard language scenario in systems not equipped with platforms and techniques described herein.

It may be noted that the systems and methods discussed herein are not limited to the above types or categories of use case scenarios, but can also be implemented in any related or other scenarios where association activities or other operations on a wireless network (WLAN or other) system become paralyzed or are otherwise affected because of the use of a non-Unicode character set. For instance, consider an access point 108 which is configured with a non-English SSID and which is configured or established as having a "Hidden" status. Such an access point 108 cannot transmit beacon information 104. In the absence of beacon information 104, a station in the set of stations 102 desiring access will be forced to send a Unicast Probe Request, with the appropriate SSID information in an encoding format understandable to the access point 108, to be able to attempt to connect to the access point 108. If the station can not send a Probe Request with SSID information encoded in the format expected by the access point 108, then the requesting station may never be able to connect to the access point 108. To ensure that such a scenario is also appropriately addressed, according to systems and methods according to the present teachings, the supplicant module 114, the graphical user interface (GUI) of the smart phone or other station 118, any WiFi™ driver installed on that phone or device, the access point 108, and/or other network resources can be configured to incorporate character set encoding, platforms, and/or techniques as described herein. Hence in implementations, not just the beacon information 104 itself, but also any Probe Request transmitted by a station 118, resulting Probe Response frames from the access point 118, and/or other frames, fields, data, elements, and/or information can include the character set encoding information 120, the SSID information identifying or employing the correct encoding set, and/or other associated information or data.

As can therefore be understood, by having native provisions in the beacon information 104, probe request, response frame, and/or other frame, field, and/or element which specifies character set encoding, a flexible approach to character set processing is adopted. According to aspects of the present teachings, the burden of decoding character set information is avoided on the supplicant module 114 and/or any other associated logic, service, or module of a smart phone or other WiFi™ platform. This results in a robust decoding scheme that converts any desired character set code to UTF-8, other Unicode standard, and/or other protocol or standard. A less complex design for each station 118 can therefore be achieved, while still providing robust language capabilities to the overall network environment 100. Platforms and techniques according to the present teachings also lead to greater flexibility in character set decoding, and likewise involve fewer necessary dependencies in carrying out character processing operations. These advantages can be observed as WiFi™ hotspots become more common in different regions of the world, and as more users move to smart phones in regions where English is not the native language. Smart phone users and users of other devices can therefore connect to an available access point, regardless of what language the SSID is configured in.

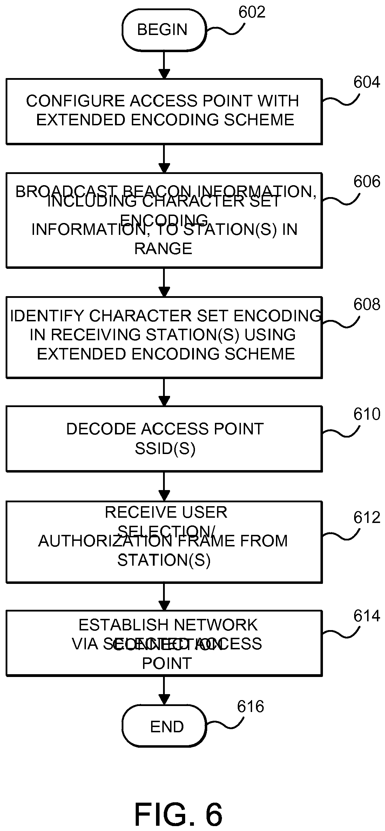

FIG. 6 illustrates a flowchart of character set encoding and other processing that can be performed in systems and methods for enabling stations to connect to wireless hotspots using non-Unicode service set identification information, according to aspects. In 602, processing can begin. In 604, an access point 108 can be configured with one or more extended character set encoding schemes encoded in the beacon information 104, according to various implementations of the present teachings. In 606, the access point 108 can broadcast the beacon information 104, including character set encoding information 120, to a set of stations 102 within range of the access point 108. In 608, the type of character set encoding and/or other information can be identified in a receiving station 118 (or stations), using the identified extended encoding scheme.

For instance, the beacon information 104 can contain fields and/or information elements, including those illustrated herein, indicating an encoding of character sets in the SSID IE 106, and/or in a vendor-specific information element (IE) 122. In 610, the receiving station 118 (or stations) can decode and/or display the SSID IE 106 of the broadcasting access point 108, for instance using the supplicant module 114, Java™ framework 116, operating system 112, and/or other software, logic, module, and/or service. The SSID IE 106 and/or other information can be displayed in the character set and/or language indicated in the character set encoding information 120, for instance in a scan window of station 118. In 612, the access point 108 can receive a user selection, authorization frame from the communicating station 118 (or stations), and/or other "handshake" or transaction between the access point 108 and communicating station 118. In 614, a network connection, for instance, to the Internet and/or other public or private network, can be established via the selected access point 108. In 616, processing can repeat, return to a prior processing point, jump to a further processing point, or end.

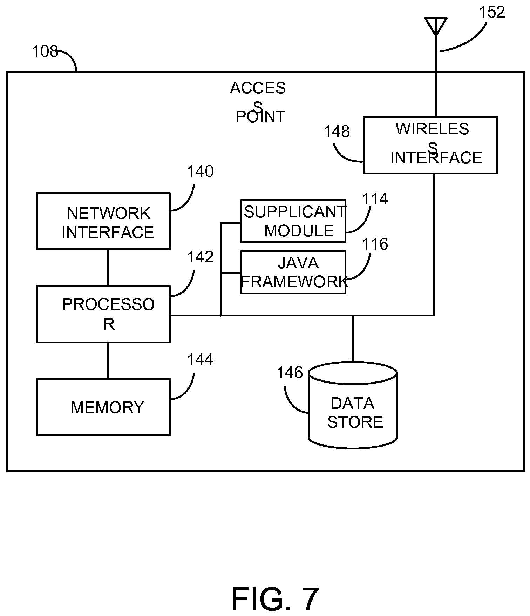

FIG. 7 illustrates various hardware, software, and other resources that can be used in implementations of enabling stations to connect to wireless hotspots using non-Unicode service set identification information, according to embodiments. In embodiments as shown, the access point 108 can comprise features of a processor 142 communicating with memory 144, such as electronic random access memory, as well as with a network interface, such as an Ethernet™ and/or other wired or wireless connection to the Internet and/or other networks. The processor 140 can be programmed or configured to carry out character set encoding operations, network connectivity operations, and other operations according to the present teachings. The processor 140 can also communicate with a local data store 146, such as a local hard disk and/or other storage, as well as to a wireless interface 148, such as a WiFi™-compatible chipset, including radio frequency chip set(s) and associated hardware and software, which may be connected to a radio frequency antenna 152 (or multiple antennas).

The foregoing description is illustrative, and variations in configuration and implementation may occur to persons skilled in the art. For example, while embodiments have been described in which encoding into certain languages, such as Chinese, Indian, and Spanish, is performed, it will be appreciated that encoding into any desired character set, language, and/or symbolic scheme can be performed. Similarly, while embodiments have been described in which one access point 108 broadcasts to a set of stations 102, in embodiments, multiple access points 108 can broadcast to one or to multiple smart phones or other stations 118 and/or sets of stations 102. Other resources described as singular or integrated can in embodiments be plural or distributed, and resources described as multiple or distributed can in embodiments be combined.

## Claims

1. A method of encoding character set information (120) performed by an access point (108), comprising:
generating character set information (120) which indicates a non-Unicode character set by which a service set identification of the access point (108) is encoded;
identifying a field of an information element for the service set identification of a wireless beacon (104) in which to encode the character set information (120); and
embedding the character set information (120) in the field of the wireless beacon (104) for decoding by one or more wireless stations (102) receiving the wireless beacon (104) to display the non-Unicode character set, wherein the field is a length field of the information element for the service set identification of the wireless beacon (104) and the character set information (120) is embedded in a specified subset of bits of the length field; and broadcasting the wireless beacon (104).

2. The method of claim 1, further comprising:
receiving an authentication frame from the at least one station (102) to establish a connection to the access point (108).

3. An access point (108), comprising:
means for generating character set information (120) which indicates a non-Unicode character set by which a service set identification of the access point (108) is encoded;
means for identifying a field of an information element for the service set identification of a wireless beacon (104) in which to encode the character set information (120); and
means for embedding the character set information (120) in the field of the wireless beacon (104) for decoding by at least one wireless station (102) receiving the wireless beacon (104) to display the non-Unicode character set, wherein the field is a length field of the information element for the service set identification of the wireless beacon (104) and the character set information (120) is embedded in a specified subset of bits of the length field; and
means for broadcasting the wireless beacon (104).

4. A method of decoding character set information (120) performed by a wireless station (102), comprising:
receiving a wireless beacon (104) from an access point (108) comprising character set information (120) and service set identification of the access point (108);
locating and extracting the character set information (120) in a field of an information element for the service set identification of the wireless beacon (104), wherein the field is a length field of the information element for the service set identification of the wireless beacon (104) and the character set information (120) is embedded in a specified subset of bits of the length field and wherein the character set information (120) indicates a non-Unicode character set used by the access point (108) to encode the service set identification;
decoding the service set identification based on the character set information (120); and
presenting the service set identification to a user of the wireless station (102) to select a network connection.

5. The method of claim 4, further comprising:
transmitting an authentication frame from the wireless station (102) to establish a connection to the access point (108).

6. A wireless station (102), comprising:
means for receiving a wireless beacon (104) from an access point (108) comprising character set information (120) and service set identification of the access point (108);
means for locating and extracting the character set information (120) in a field of an information element for the service set identification of the wireless beacon (104), wherein the field is a length field of the information element for the service set identification of the wireless beacon (104) and the character set information (120) is embedded in a specified subset of bits of the length field and wherein the character set information (120) indicates a non-Unicode character set used by the access point (108) to encode the service set identification;
means for decoding the service set identification based on the character set information (120); and
means for presenting the service set identification to a user of the wireless station (102) to select a network connection.

7. A computer program product, comprising:
a computer-readable medium comprising:
at least one instruction for causing a computer to perform a method according to any of claims 1 and 2 or 4 and 5.

## Patentansprüche

1. Ein Verfahren für Kodieren von Zeichensatzinformation (120) durchgeführt von einem Zugriffspunkt (108) aufweisend:
Erzeugen von Zeichensatzinformation (120), welche anzeigt einen nicht-Unicode Zeichensatz, durch welchen eine Dienstsatzidentifikation von dem Zugriffspunkt (108) kodiert ist;
Identifizieren eines Feldes von einem Informationselement für die Dienstsatzidentifikation von einem drahtlosen Beacon (104), in dem die Zeichensatzinformation (120) kodiert ist; und
Einbetten der Zeichensatzinformation (120) in das Feld von dem drahtlosen Beacon (104) für Dekodieren durch einen oder mehrere drahtlose Stationen (102), die den drahtlosen Beacon (104) empfangen, zum Darstellen des nicht-Unicode Zeichensatzes, wobei das Feld ein Längenfeld von dem Informationselement für die Dienstsatzidentifikation von dem drahtlosen Beacon (104) ist und die Zeichensatzinformation (120) eingebettet ist in einem spezifischen Untersatz von Bits von dem Längenfeld; und
Ausstrahlen des drahtlosen Beacons (104).

2. Das Verfahren von Anspruch 1, weiter aufweisend:
Empfangen eines Authentifikationsrahmens von der zumindest einen Station (102) zum Herstellen einer Verbindung zu dem Zugriffspunkt (108).

3. Ein Zugriffspunkt (108), aufweisend:
Mittel zum Erzeugen von Zeichensatzinformation (120), welche anzeigt einen nicht-Unicode Zeichensatz, durch welchen eine Dienstsatzidentifikation von dem Zugriffspunkt (108) kodiert ist;
Mittel zum Identifizieren eines Feldes von einem Informationselement für die Dienstsatzidentifikation von einem drahtlosen Beacon (104), in dem die Zeichensatzinformation (120) kodiert ist; und
Mittel zum Einbetten der Zeichensatzinformation (120) in das Feld von dem drahtlosen Beacon (104) für Dekodieren durch zumindest eine drahtlose Station (102), die den drahtlosen Beacon (104) empfängt, zum Darstellen des nicht-Unicode Zeichensatzes, wobei das Feld ein Längenfeld von dem Informationselement für die Dienstsatzidentifikation von dem drahtlosen Beacon (104) ist und die Zeichensatzinformation (120) eingebettet ist in einem spezifischen Untersatz von Bits von dem Längenfeld; und
Mittel zum Ausstrahlen des drahtlosen Beacons (104).

4. Ein Verfahren von Dekodieren von Zeichensatzinformation (120) durchgeführt durch eine drahtlose Station (102) aufweisend:
Empfangen eines drahtlosen Beacons (104) von einem Zugriffspunkt (108) aufweisend Zeichensatzinformation (120) und Dienstsatzidentifikation von dem Zugriffspunkt (108);
Orten und Extrahieren der Zeichensatzinformation (120) in einem Feld von einem Informationselement für die Dienstsatzidentifikation von dem drahtlosen Beacon (104), wobei das Feld ein Längenfeld von dem Informationselement für die Dienstsatzidentifikation von dem drahtlosen Beacon (104) ist und die Zeichensatzinformation (120) eingebettet ist in einem spezifischen Untersatz von Bits von dem Längenfeld und wobei die Zeichensatzinformation (120) anzeigt einen nicht-Unicode Zeichensatz, der verwendet wird durch den Zugriffspunkt (108) zum Kodieren der Dienstsatzidentifikation;
Dekodieren der Dienstsatzidentifikation basierend auf der Zeichensatzinformation (120); und
Präsentieren der Dienstsatzidentifikation zu einem Benutzer von der drahtlosen Station (102) zum Auswählen einer Netzwerkverbindung.

5. Das Verfahren von Anspruch 4, weiter aufweisend:
Übertragen eines Authentifikationsrahmens von der drahtlosen Station (102) zum Herstellen einer Verbindung zu dem Zugriffspunkt (108).

6. Eine drahtlose Station (102), aufweisend:
Mittel zum Empfangen eines drahtlosen Beacons (104) von einem Zugriffspunkt (108) aufweisend Zeichensatzinformation (120) und Dienstsatzidentifikation von dem Zugriffspunkt (108);
Mittel zum Orten und Extrahieren der Zeichensatzinformation (120) in einem Feld von einem Informationselement für die Dienstsatzidentifikation von dem drahtlosen Beacon (104), wobei das Feld ein Längenfeld von dem Informationselement für die Dienstsatzidentifikation von dem drahtlosen Beacon (104) ist und die Zeichensatzinformation (120) eingebettet ist in einem spezifischen Untersatz von Bits von dem Längenfeld und wobei die Zeichensatzinformation (120) anzeigt einen nicht-Unicode Zeichensatz, der verwendet wird durch den Zugriffspunkt (108) zum Kodieren der Dienstsatzidentifikation;
Mittel zum Dekodieren der Dienstsatzidentifikation basierend auf der Zeichensatzinformation (120); und
Mittel zum Präsentieren der Dienstsatzidentifikation zu einem Benutzer von der drahtlosen Station (102) zum Auswählen einer Netzwerkverbindung.

7. Ein Computerprogrammprodukt aufweisend:
ein computerlesbares Medium aufweisend:
zumindest eine Instruktion zum Verursachen, dass ein Computer ein Verfahren gemäß einem von den Ansprüchen 1 und 2 oder 4 und 5 ausführt.

## Revendications

1. Procédé de codage d'informations de jeu de caractères (120), mis en oeuvre par un point d'accès (108), comprenant :
la génération d'informations de jeu de caractères (120) qui indiquent un jeu de caractères en format non Unicode par lequel une identification d'un ensemble de services du point d'accès (108) est codée ;
l'identification d'un champ d'un élément d'informations pour l'identification d'un ensemble de services d'une balise sans fil (104) dans laquelle les informations de jeu de caractères (120) doivent être codées ; et
l'intégration des informations de jeu de caractères (120) dans le champ de la balise sans fil (104) aux fins de décodage par une ou plusieurs stations sans fil (102) recevant la balise sans fil (104) pour afficher le jeu de caractères en format non Unicode, dans lequel le champ est un champ de longueur de l'élément d'informations pour l'identification d'un ensemble de services de la balise sans fil (104) et les informations de jeu de caractères (120) sont intégrées dans un sous-ensemble spécifié de bits du champ de longueur ; et la diffusion de la balise sans fil (104).

2. Procédé selon la revendication 1, comprenant en outre :
la réception d'une trame d'authentification depuis l'au moins une station (102) pour établir une connexion au point d'accès (108).

3. Point d'accès (108), comprenant :
un moyen pour générer des informations de jeu de caractères (120) qui indiquent un jeu de caractères en format non Unicode par lequel une identification d'un ensemble de services du point d'accès (108) est codée ;
un moyen pour identifier un champ d'un élément d'informations pour l'identification d'un ensemble de services d'une balise sans fil (104) dans laquelle les informations de jeu de caractères (120) doivent être codées ; et
un moyen pour intégrer les informations de jeu de caractères (120) dans le champ de la balise sans fil (104) pour le décodage par au moins une station sans fil (102) recevant la balise sans fil (104) pour afficher le jeu de caractères en format non Unicode, dans lequel le champ est un champ de longueur de l'élément d'informations pour l'identification d'un ensemble de services de la balise sans fil (104) et les informations de jeu de caractères (120) sont intégrées dans un sous-ensemble spécifié de bits du champ de longueur ; et un moyen pour diffuser la balise sans fil (104).

4. Procédé de décodage d'informations de jeu de caractères (120) mis en oeuvre par une station sans fil (102), comprenant :
la réception d'une balise sans fil (104) depuis un point d'accès (108) comprenant des informations de jeu de caractères (120) et une identification d'ensemble de services du point d'accès (108) ;
la localisation et l'extraction des informations de jeu de caractères (120) dans un champ d'un élément d'informations pour l'identification d'un ensemble de services de la balise sans fil (104), dans lequel le champ est un champ de longueur de l'élément d'informations pour l'identification d'un ensemble de services de la balise sans fil (104) et les informations de jeu de caractères (120) sont intégrées dans un sous-ensemble spécifié de bits du champ de longueur et dans lequel les informations de jeu de caractères (120) indiquent un jeu de caractères en format non Unicode utilisé par le point d'accès (108) pour coder l'identification d'ensemble de services ;
le décodage de l'identification d'un ensemble de services sur la base des informations de jeu de caractères (120) ; et
la présentation de l'identification d'un ensemble de services à un utilisateur de la station sans fil (102) pour sélectionner une connexion de réseau.

5. Procédé selon la revendication 4, comprenant en outre :
la transmission d'une trame d'authentification depuis la station sans fil (102) pour établir une connexion au point d'accès (108).

6. Station sans fil (102), comprenant :
un moyen pour recevoir une balise sans fil (104) depuis un point d'accès (108) comprenant des informations de jeu de caractères (120) et une identification d'ensemble de services du point d'accès (108) ;
un moyen pour localiser et extraire les informations de jeu de caractères (120) dans un champ d'un élément d'informations pour l'identification d'un ensemble de services de la balise sans fil (104), dans lequel le champ est un champ de longueur de l'élément d'informations pour l'identification d'un ensemble de services de la balise sans fil (104) et les informations de jeu de caractères (120) sont intégrées dans un sous-ensemble spécifié de bits du champ de longueur et dans lequel les informations de jeu de caractères (120) indiquent un jeu de caractères en format non Unicode utilisé par le point d'accès (108) pour coder l'identification d'un ensemble de services ;
un moyen pour décoder l'identification d'un ensemble de services sur la base des informations de jeu de caractères (120) ; et
un moyen pour présenter l'identification d'un ensemble de services à un utilisateur de la station sans fil (102) pour sélectionner une connexion de réseau.

7. Produit de programme d'ordinateur, comprenant :
un support lisible par ordinateur comprenant :
au moins une instruction pour amener un ordinateur à mettre en oeuvre un procédé selon l'une des revendications 1 et 2 ou 4 et 5.
